# EUROPEAN PATENT APPLICATION

(11) **EP 1 457 391 A1**
(43) Date of publication of application: **15.09.2004**
(21) Application number: 03100598.6
(22) Date of filing: 10.03.2003
(51) Int. Cl.: B60R 21/01

(54) **System for detecting seat occupancy**

(71) Applicant: IEE INTERNATIONAL ELECTRONICS & ENGINEERING S.A., 6468 Echternach (LU)
(72) Inventor: Clos, Harald, 66113 Saarbrücken (DE); Federspiel, Laurent, 5366 Münsbach (LU); Schoos, Aloyse, 8094 Bertrange (LU)
(74) Representative: Beissel, Jean

(57) **Abstract**

A system for the detection of a seat occupancy in a vehicle, comprises first and second capacitive electrodes (1,2), said first and second capacitive electrodes (1,2) being arranged in a compartment of said vehicle, and a driver and evaluation circuit (20), operatively connected to said first and second capacitive electrodes (1,2). According to the invention, the first capacitive electrode (1) is arranged in a seat (22) of the vehicle while the second capacitive electrode (2) is arranged in a foot-area of the vehicle, and the driver and evaluation circuit (20) comprises means for driving said first capacitive electrode (1) and determining a capacitive coupling with a conductive object placed on said seat (22) and means for driving said second electrode (1,2) and determining a capacitive coupling between said second electrode (2) and said first electrode (1).

## Description

### Introduction

The present invention generally relates to automotive occupancy sensor systems for determining the presence of an object or a passenger in a seat, in order to provide an occupancy state or condition signal for use with a safety restraint system control. The present invention more specifically relates to a system for classification of a seat occupancy.

In order to protect the lives of passengers during a traffic accident, modern vehicles are generally fitted provided with a protection system comprising several airbags and seat belt pretensioners, which are used to absorb the energy of a passenger released during the collision due to the accident. It is clear that such protection systems are most effective when they are well adapted to the specific requirements of an actual seat occupancy. That is why microprocessor-controlled protection systems have been designed which provide several operational modes, allowing for example an adaptation of the instant at which airbags are deployed, the volume to which the airbags are inflated, the instant at which safety belts are released after the collision, etc, as a function of the stature of a passenger on the seat. In order to enable the control microprocessor to select the optimum operational mode for a given seat occupancy status, it is of course necessary to detect one or several parameters characterizing the occupancy status of the seat and to classify the occupancy into one of several classes, each of which is associated to a specific operational mode of the restraint system.

Although the merit of airbags is largely recognized in the interest of passenger safety, there are situations in which the deployment of an airbag is not desired or may be harmful or even constitute serious danger. For instance, in order to reduce the costs for the reparation of the vehicle, the airbag associated with a seat should be disabled when the respective seat is not occupied. Moreover, the presence of an auxiliary child restraint seat on the passenger seat may represent a situation, where the deployment of the airbags should be disabled. In fact, for most auxiliary child restraint seats, which point in the opposite direction to the direction of travel of the vehicle, i.e. rear facing infant seats, there is the risk that the deployment of the airbag will throw the child together with the seat violently towards the rear of the vehicle and will be the cause of serious injury. It follows that the occupancy parameters for these cases should also be reliably detected.

The detection of can e.g. be achieved by seat occupancy sensors, which comprise a plurality of pressure sensors distributed over the surface of the seat. The pressure sensors comprise pressure sensitive resistors, i.e. the resistance of these pressure sensors changes with the pressure applied on the sensor. The reading of the resistance values of the individual pressure sensors thus gives an indication on the pressure acting on each cell and accordingly can be related to the weight acting on the seat. Furthermore the distribution of the pressure values over the surface of the seat can be related to the size or the form of a person or an object occupying the seat. Different occupancy sensors for determining a pressure profile acting on the seat are e.g. disclosed in WO-A-98/14345, WO-A-99/39168 and EP-A-0 891 898.

However, the total weight of a passenger does not act solely on the surface of the seat, since part of the weight is supported by the passenger's legs, which rest on the floor of the vehicle, and another part rests on the back of the seat. In addition, the ratios between the various parts vary considerably with the passenger's position on the seat. In certain critical seating positions, the pressure pattern resulting from the passenger may therefore be not sufficiently discrete to allow a classification by use of a pressure pattern system.

A different approach for gathering relevant parameters of a seat occupancy is based on the detection of the capacitive coupling of a body to one or several electrodes arranged in the seat. Such a measurement system is for instance described in LU-A-88 828. This measurement system comprises at least one transmitting electrode and at least one receiving electrode that are capacitively coupled by a conductive body. The receive electrodes are connected to an analysis circuit that determines the capacitive coupling of the transmitting antenna with the conductive body by comparing the measured signal with a reference signal. Various other systems have been disclosed with electrodes arranged at different locations in the passenger compartment in order to detect the presence and/or the nature of a seat occupancy and to classify the occupancy status in one of several classes.

### Object of the invention

The object of the present invention is to provide an improved system for the detection of a seat occupancy.

### General description of the invention

The present invention relates to a system for the detection of a seat occupancy in a vehicle, comprising first and second capacitive electrodes, said first and second capacitive electrodes being arranged in a compartment of said vehicle, and a driver and evaluation circuit, operatively connected to said first and second capacitive electrodes. According to the invention, the first capacitive electrode is arranged in a seat of the vehicle while the second capacitive electrode is arranged in a foot-area of the vehicle, and the driver and evaluation circuit comprises means for driving said first capacitive electrode and determining a capacitive coupling with a body or object placed on said seat and means for driving said second electrode and determining a capacitive coupling between said second electrode and said first electrode.

The present invention thus provides a field detection system, which can operate in two different operating modes:
□ In a so-called loading mode, the first electrode arranged in the seat of the vehicle is driven by an AC voltage of a first frequency and the capacitive coupling to an electroconductive body or object is determined. This coupling depends on the dielectric properties of the body or object placed on the seat. If the seat is not occupied, i.e. if no electroconductive object is present, no significant capacitive coupling will occur. On the other hand, if the seat is occupied by an adult person, the capacitive coupling will be higher than in the case of a child sitting on the seat. Furthermore, the capacitive coupling depends on the distance between the first electrode and the conductive body, such that a child sitting in an auxiliary child restraint system provides a lower signal than a child sitting directly on the seating surface of the seat. On the other hand, if the child seat contains a metal frame or other metal parts, the signal obtained in loading mode measurement will be much higher than the signal generated in the presence of an adult person. It follows that very low signals and very high signals are indicative of the presence of a child seat on the seat. The presence of such auxiliary child seats may thus reliably detected whereby the level of the signal even allows the distinction between different types of child seats. The determined capacitive coupling in loading mode operation of the device can therefore be used in order to classify the seat occupancy.
□ In the so-called coupling mode, the second electrode, which is arranged in the foot-area of the vehicle compartment, is driven by an AC voltage of a second frequency and the capacitive coupling between said second electrode and said first electrode is determined. This capacitive coupling is strongly influenced by the presence of an electroconductive body between the first and the second electrode and the distance of this body from the respective electrodes. In other words, the coupling mode measurement supplies reliable information as to whether a conductive object positioned on the seat protrudes into the floor compartment, like e.g. the legs and feet of an adult occupant. Thus, children generate very low signal levels in the coupling mode measurements, as their feet do not reach down to the floor in many sitting positions. The discrimination between adults and children accordingly becomes very efficient in most sitting positions. Even in those critical positions where an occupant relieves the pressure from the seat by pulling himself up with the roof handle or by wedging himself in between the seat backrest and the floor, the occupant is close enough to both parts of the field detection system to generate a high coupling signal and can thus be detected and classified correctly. On the other hand, if a child seat is placed on the seat, no capacitive coupling between the second and first electrode will occur. It follows that, if the loading mode measurement indicates that an obnject is placed on the seat, the absence of a coupling signal between the two electrodes is a reliable indication that the detected object is a child restraint seat.

By alternatively operating the present system in loading and in coupling mode, the results of the two operating modes can be combined in order to ensure a reliable classification of the seat occupancy. It will be appreciated, that the system for the detection of a seat occupancy may operate with identical AC voltages in both the loading mode and coupling mode, or with different AC voltages and/or different AC frequencies in loading mode and in coupling mode. It will further be noted, that for one or each operating mode, the AC frequency may be varied during a measurement cycle within a specific range in order to eliminate noise or interfering signals, which may be related to a specific frequency. By scanning the AC frequencies within a specific range, the system can be tuned in order to obtain an optimal signal, thus resulting in a more robust discrimination of the actual seat occupancy status.

During the loading mode, the coupling to an electroconductive body is preferably determined by measuring a loading current flowing from the first electrode. In a preferred embodiment of the invention, the means for determining a capacitive coupling with an object placed on said seat therefore comprises means for measuring a loading current flowing from said first electrode.

During the coupling mode, the capacitive coupling between the second and the first electrode can be determined by measuring a coupling current into said fist electrode. Accordingly, the means for determining a capacitive coupling between said second electrode and said first electrode preferably comprises means for measuring a coupling current into said first electrode.

In a preferred embodiment of the invention, the second electrode is arranged underneath a floor carpet of said vehicle. In this position, the second electrode is not visible and well protected against mechanical wear by the vehicle occupant. It should be noted, that the measurement error caused by water on the floor carpet is minimized in the present detection system by measuring the coupling mode signal in one direction only, i.e. by using the floor electrode as emitter only and measuring at this specifically modulated signal.

In order to prevent the second electrode to be displaced from its operating position, the second electrode is preferably fixed in the vehicle compartment. In a preferred embodiment, the second electrode is e.g. attached to said floor carpet by gluing, heat-sealing, a foaming process or any other joining technology.

The second electrode itself may e.g. comprise a metal foil, a metal wire fabric, a metal-coated fabric or nonwoven and/or a metal coated thermoplastic film. In this context, the expression "fabric material" should be understood as to include any woven, knitted, or felted material. It will be appreciated, that the second electrode may be an integral part of the carpet floor. In fact the second electrode may comprise a metal coating of the floor carpet (preferably on the lower surface thereof) or a plurality of metal fibres which are woven or otherwise integrated into the carpet.

In order to protect the electrode against environmental conditions, the second electrode may further comprise a protective covering. The second electrode may for instance be protected against the environment by a protective sheath made of thermoplastic film, rubber, or other plastics material or by foaming-in.

The first electrode may be integrated into the backrest of the seat. In a preferred embodiment however, said first electrode is arranged in the seat plain of said seat. This arrangement ensures a reliable detection of the presence of a person on the seat even if the person is bend forwards and thus not in contact with the backrest of the seat.

The first electrode preferably comprises at least one sensing electrode and at least one shielding electrode, said sensing electrode being arranged in facing relationship with said shielding electrode, said sensing electrode being directed towards an object placed on said seat and said shielding electrode being directed away from said object. In operation, the shielding electrode is supplied with the same AC voltage than the sensing electrode. It follows that the electrical field emanating from the sensing electrode is only oriented towards a possible seat occupant and not towards the floor of the vehicle. The detection of a conductive object below the seat is thus prevented.

The sensing electrode and/or said shielding electrode of the second electrode itself may e.g. comprise a metal foil, a metal wire fabric, a metal-coated fabric or nonwoven and/or a metal coated thermoplastic film. In this context, the expression "fabric material" should be understood as to include any woven, knitted, or felted material.

In a most preferred embodiment of a system for detecting a seat occupancy, a field detection system as described above is combined with a device for the detection of a pressure profile exerted by an object or a person on the seat.

This means that the system for the detection of a seat occupancy further comprises a pressure sensing mat arranged in said seat of said vehicle. Such pressure sensitive mat are well known in the art and commonly used for seat occupancy detection (see e.g. WO-A-98/14345, WO-A-99/39168 and EP-A-0 891 898). The measuring data of the field detection system and the pressure sensing mat are preferably feed to a combined evaluation and classification algorithm in order to provide a very reliable classification of the actual seat occupancy. This classification algorithm may e.g. be implemented in the driver and evaluation circuit of the field detection system, in which case the pressure sensing mat is advantageously operatively connected to said driver and evaluation circuit. The combination of the field detection system and the pressure sensing mat advantageously increases the robustness of the seat occupancy classification as the classification obtained by one of the systems may be verified by the second system. For instance, the typical pressure profile generated by child restraint seats will be detected by the pressure sensing mat and may be used in order to confirm the "child seat" classification obtained by the loading mode and coupling mode operation of the field detection. Thus the reliability of the classification may be considerably enhanced.

It should be noted that in a combined field and pressure detection system said first electrode is preferably attached on an upper surface of said pressure sensing mat. The first electrode may e.g. be fixed on the pressure sensing mat by heat sealing a conductive fleece or fabric material as a shielding electrode onto one of the carrier foils of a pressure sensing mat. The first electrode and the pressure sensing mat thus form a single unit which can easily be handled and mounted into the seat. Alternatively, the shielding electrode of the first electrode may be formed by a metallic coating applied onto the top carrier foil of the pressure sensing mat, after which the isolating layer and the sensing electrode are attached on top of the metallic coating.

In order to prevent the first electrode to be displaced from its operating position, the first electrode is preferably fixed to the vehicle seat. In a preferred embodiment, the first electrode is e.g. attached to a seat cover or to a seat upholstery of said seat by gluing, heat-sealing, sewing or any other joining technology. In another embodiment, the first electrode and possibly the pressure sensing mat is directly integrated into a seat upholstery of said seat in a foaming process.

In a possible embodiment of the present invention, the first electrode is formed by a seat heating element. The seat heating element usually consists of at least one metal wire or at least carbon line arranged in a meandering configuration on a suitable supporting material. Alternatively, the seat heater may comprise a plurality of conductive traces on a supporting material. In operation, the conductive heater element is powered by a DC current in order to produce heat necessary to heat the seating surface. If the heater element is powered by an AC current, the heater element may act as a sensing electrode for the first electrode.

If a seat heater is used together with a pressure sensing mat, the heater element has to be placed on top of a pressure sensing mat. For the present invention, this arrangement can be advantageously used if the seat heater acts as sensing electrode. The arrangement is preferably such that a conductive shielding electrode is fixed onto the carrier foil of the pressure sensing mat and using the seat heater, which is placed on top of the shielding electrode as sensing electrode. The use of the seat heater as sensing electrode together with a conductive tissue/fabric shielding electrode being directly attached to the pressure sensitive mat reduces process efforts, allows a compact assembly of the system and fast and easy integration into the car seat.

In order to detect the environmental conditions in which the first electrode operates and if necessary correct the sensed values, the driver and evaluation circuit preferably comprises means for resistance measurement between said at least one sensing electrode and said at least one shielding electrode. The resistance between the two electrodes is largely dependent of the humidity of an insulating layer placed between the sensing and the shielding electrode. By determining the resistance between the two electrodes, it is thus possible to monitor whether the first electrode is working under optimal environmental conditions. If such optimum conditions are not given, the detected capacitive coupling values measured with the first electrode may be corrected accordingly or a malfunction signal may be generated. Furthermore, an additional, separately powered, electrode wire arranged around the outer contour of the electrode can be used for measuring leakage currents to the seat frame. If such leakage current exceeds a specific threshold value, a malfunction signal may be generated and the device can e.g. be disabled in order to protect the system against further damage.

The present invention also elates to a method for the detection of a seat occupancy in a vehicle, which comprises the steps of:
a) driving a first capacitive electrode arranged in a seat of said vehicle and determining a capacitive coupling with an object placed on said seat, and
b) driving a second capacitive electrode arranged in a foot-area of said vehicle and determining a capacitive coupling between said second electrode and said first electrode.

In a preferred embodiment, this method further comprises the step of determining a pressure profile exerted by an object placed on the seat.

The determined capacitive coupling with an object, said determined capacitive coupling between said second electrode and said first electrode and said determined pressure profile are preferably supplied to a combined seat occupancy classification algorithm.

### Detailed description with respect to the figures

The present invention will be more apparent from the following description of several not limiting embodiments with reference to the attached drawings, wherein
- Fig.1:: shows a schematic representation of the measuring principle of a device for detecting seat occupancy according to an embodiment of the present invention;
- Fig.2:: shows an electrode assembly to be used as seat electrode;
- Fig.3:: shows a set-up for measuring the environmental condition.

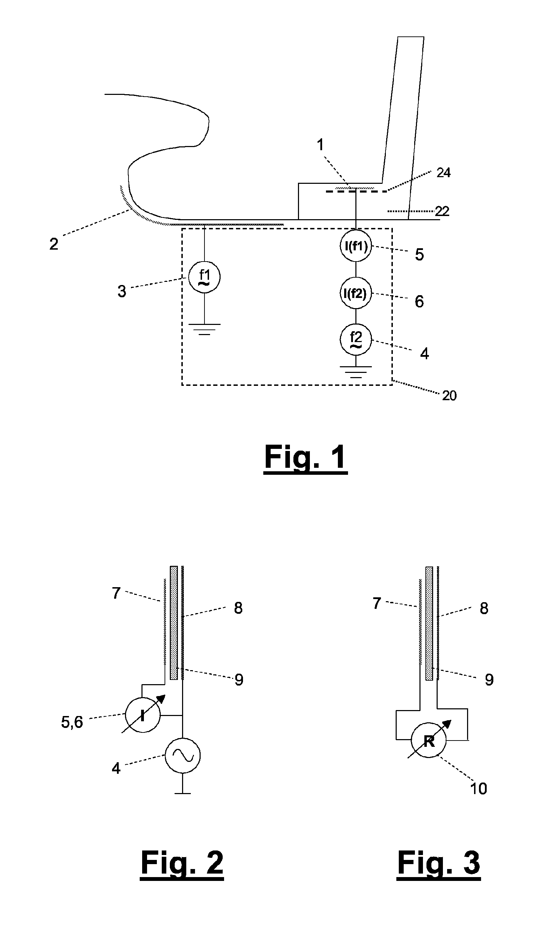

Fig. 1 schematically represents an embodiment of a device for detecting seat occupancy according to the present invention. The device comprises a field detection system comprising a first electrode 1 arranged in the seat 22 of the vehicle and a second electrode 2 arranged in a foot area of the vehicle compartment. The first electrode 1, or seat electrode, is preferably arranged in the seat plain of the seat 22, whereas the second electrode 2, or foot electrode, may be arranged underneath a floor carpet of the vehicle compartment.

The first and the second electrodes 1, 2 are operatively connected to a driver and evaluation circuit 20, which may be an integral component of an airbag control unit (not shown). Alternatively, the driver and evaluation circuit is operatively connected to the airbag control unit for supplying data relating to an occupancy classification to said airbag control unit.

The driver and evaluation circuit 20 comprises means 4 for driving said first capacitive electrode 1 and means 6 for determining a capacitive coupling with a conductive body or object placed on said seat 22. The means 4 for driving said first capacitive electrode 1 comprises e.g. an AC voltage source 4 for generating an AC signal with a frequency f2. The means 6 for determining a capacitive coupling with a conductive body or object placed on said seat 22 may comprise a current meter 6 for measuring a loading current flowing from the first electrode 1 towards an object placed on the seat, when the first electrode 1 is driven by AC source 4.

Furthermore, the driver and evaluation circuit 20 comprises means 3 for driving said second electrode 2 and means 5 for determining a capacitive coupling between said second electrode 2 and said first electrode 1. The means 3 for driving said second electrode 2 comprises e.g. an AC voltage source 3 for generating an AC signal with a frequency f1. The means 5 for determining a capacitive coupling between said second electrode 2 and said first electrode 1 may comprise a current meter 5 for measuring a coupling current flowing from the second electrode 2 into the first electrode 1, when the second electrode 2 is driven by AC source 3.

Alternating measurements of differently modulated electrical fields between seat electrode 1 and car body, and floor electrode 2 and seat electrode 1 respectively, give an information whether a conductive object is positioned on the seat and if said conductive object protrudes into the floor compartment, like e.g. the legs and feet of an adult occupant.

In operation, the electrodes 1 and 2 are used as follows:
□ In a so-called loading mode, the first electrode 1 is driven by AC voltage source 4 of a first frequency f2 and the coupling current I(f2) is measured by current meter 6. The coupling towards an electroconductive body placed on the seat 22 depends on the dielectric properties of the body or object placed on the seat. If the seat is not occupied, i.e. if no electroconductive object is present, no significant capacitive coupling will occur. On the other hand, if the seat is occupied by an adult person, the capacitive coupling will be higher than in the case of a child sitting on the seat.
□ In the so-called coupling mode, the second electrode 2 is driven by AC voltage source 3 of a second frequency f1 and the capacitive coupling between said second electrode and said first electrode is determined my measuring the coupling current I(f1) with current meter 5. This capacitive coupling is strongly influenced by the presence of an electroconductive body between the first and the second electrode and the distance of this body from the respective electrodes. In other words, the coupling mode measurement supplies reliable information as to whether a conductive object positioned on the seat protrudes into the floor compartment, like e.g. the legs and feet of an adult occupant.

By alternating the two operation modes, reliable information can thus be gathered regarding the occupancy status of the seat. In a preferred embodiment of the invention, the system further comprises a pressure sensing mat 24 (shown in dashed line) arranged in the seat 22 of the vehicle. The pressure profile acting on the seat, which is determined by the pressure sensing mat can then be used to further enhance the classification of the seat occupancy.

If a pressure sensing mat 24 is used in combination with the field detection system described above, the pressure sensing mat and electrode 1 are preferably assembled to form a single unit. In that case, electrode 1 is e.g. directly attached on the top surface of pressure sensing mat 24.

Fig. 2 shows a preferred embodiment for seat electrode 1. Seat electrode 1 comprises a shielding electrode 8 (guard) directed towards the seat frame and a sensing electrode 7, directed towards the occupant of the seat. Between the sensing electrode 7 and the shielding electrode 8 an isolating layer 9 is required. In operation, the shielding electrode 8 and the sensing electrode 7 are driven by the same AC voltage source 4, so that the guard electrode 8 prevents the electric field from the sensing electrode 7 to couple with the seat frame. Thus the sensing electrode is active only in the direction of a seat occupant and not towards an object placed below the seat.

If the first electrode 1 is fixed on a pressure sensing mat 24, the guard electrode 8 may be manufactured by heat-sealing a conductive fleece or fabric material onto the pressure sensitive mat 24. If a seat heater is further used, this seat heater must be placed on top of said mat 24. The seat heater may than act as a sensing electrode 7. An additional, separately powered wire in the outer contour of the seat heater can be used for measuring leakage currents to the seat frame and as redundant electrode for a child seat detection system.

In order to monitor whether the electrode 1 is working under optimal environmental conditions, i.e. if the isolating layer 9 is dry, a resistance measurement 10 between sensing electrode 7 and the shielding electrode 8 may be performed. Such a resistance measurement is schematically represented in fig. 3.

## Claims

1. System for the detection of a seat occupancy in a vehicle, comprising
first and second capacitive electrodes, said first and second capacitive electrodes being arranged in a compartment of said vehicle, and
a driver and evaluation circuit, operatively connected to said first and second capacitive electrodes,
**characterised in that**
said first capacitive electrode is arranged in a seat of said vehicle and said second capacitive electrode is arranged in a foot-area of said vehicle, and
said driver and evaluation circuit comprises means for driving said first capacitive electrode and determining a capacitive coupling with a body or object placed on said seat and means for driving said second electrode and determining a capacitive coupling between said second electrode and said first electrode.

2. System for the detection of a seat occupancy according to claim 1, wherein said means for determining a capacitive coupling with an object placed on said seat comprises means for measuring a loading current flowing from said first electrode.

3. System for the detection of a seat occupancy according to claim 1 or 2, wherein said means for determining a capacitive coupling between said second electrode and said first electrode comprises means for measuring a coupling current into said first electrode.

4. System for the detection of a seat occupancy according to any one of claims 1 to 3, wherein said second electrode is arranged underneath a floor carpet of said vehicle.

5. System for the detection of a seat occupancy according to claim 4, wherein said second electrode is attached to said floor carpet.

6. System for the detection of a seat occupancy according to any one of claims 1 to 5, wherein said second electrode comprises a metal foil, a metal wire fabric, a metal-coated fabric or nonwoven and/or a metal coated thermoplastic film.

7. System for the detection of a seat occupancy according to any one of claims 1 to 6, wherein said second electrode comprises a protective covering.

8. System for the detection of a seat occupancy according to any one of claims 1 to 7, wherein said first electrode is arranged in the seat plain of said seat.

9. System for the detection of a seat occupancy according to any one of claims 1 to 8, wherein said first electrode comprises at least one sensing electrode and at least one shielding electrode, said sensing electrode being arranged in facing relationship with said shielding electrode, said sensing electrode being directed towards an object placed on said seat and said shielding electrode being directed away from said object.

10. System for the detection of a seat occupancy according to claim 9, wherein said sensing electrode and/or said shielding electrode comprises a metal foil, a metal wire fabric, a metal-coated fabric or nonwoven and/or a metal coated thermoplastic film.

11. System for the detection of a seat occupancy according to any one of claims 1 to 10, further comprising a pressure sensing mat arranged in said seat of said vehicle.

12. System for the detection of a seat occupancy according to claim 11, wherein said first electrode is attached on an upper surface of said pressure sensing mat.

13. System for the detection of a seat occupancy according to any one of claims 1 to 12, wherein said first electrode is attached to a seat cover or to a seat upholstery of said seat.

14. System for the detection of a seat occupancy according to any one of claims 1 to 12, wherein said first electrode is integrated into a seat upholstery of said seat.

15. System for the detection of a seat occupancy according to any one of claims 1 to 13, wherein said first electrode is formed by a seat heating element.

16. System for the detection of a seat occupancy according to any one of claims 9 to 15, wherein said driver and evaluation circuit comprises means for resistance measurement between said at least one sensing electrode and said at least one shielding electrode.

17. Method for the detection of a seat occupancy in a vehicle comprising the steps of:
a) driving a first capacitive electrode arranged in a seat of said vehicle and determining a capacitive coupling with an object placed on said seat, and
b) driving a second capacitive electrode arranged in a foot-area of said vehicle and determining a capacitive coupling between said second electrode and said first electrode.

18. Method for the detection of a seat occupancy according to claim 17, further comprising the step determining a pressure profile exerted by an object placed on the seat.

19. Method for the detection of a seat occupancy according to claim 18, wherein said determined capacitive coupling with an object, said determined capacitive coupling between said second electrode and said first electrode and said determined pressure profile are supplied to a combined seat occupancy classification algorithm.
